# EUROPEAN PATENT SPECIFICATION

(11) **EP 2 704 277 B1**
(45) Date of publication and mention of the grant of the patent: **23.09.2015**
(21) Application number: 12724653.6
(22) Date of filing: 26.04.2012
(51) Int. Cl.: H02G 3/04, H02G 3/06

(54) **IMPROVED PIECE FOR CONNECTING SEGMENTS OF BASKET CHANNELS FOR CABLES**
VERBESSERTES VERBINDUNGSSTÜCK FÜR SEGMENTE VON KORBFÜHRUNGEN FÜR KABEL
PIÈCE DE JONCTION DE SEGMENTS DE CANALISATIONS POUR CÂBLES EN GRILLE PERFECTIONNÉE

(43) Date of publication of application: 05.03.2014
(73) Proprietor: Aiscan, S.L., 03410 Biar (ES)
(72) Inventor: FRANCÉS PÉREZ, Manuel, E-03410 Biar (Alicante) (ES)
(74) Representative: Arpe Fernandez, Manuel de
(86) International application number: PCT/ES2012/070285
(87) International publication number: WO 2013/144387

(56) References cited:
- DE-U1-202007 009 658
- ES-A1- 2 370 570

## Description

This application is a continuation of Document No. PCT/ES2012/070068 named "Connecting piece for wire cable channelling sections" filed on 2 February 2012, whose contents are herein incorporated by reference.

### FIELD AND PRIOR ART

The invention generally refers to the laying and assembly of wire cable channels, for the laying of wires in all kinds of works and constructions.

Wire cable channels, according to the current state of art, can be understood as those channelling built on the basis of a plurality of sections in the shape of a tray that are connected one after another. Each section of the cable channel is formed by a plurality of metallic wire bars that extend lengthwise and that are joined together by means of a series of U-shaped metallic wire bars transversely positioned and welded to the longitudinal bars, such longitudinal bars forming the side walls and the bottom wall of the channel.

As it has been previously mentioned, a certain number of cable channel sections must be joined one after another in a lengthwise direction in order to obtain a cable channelling of a specific length.

The European Patent 0418167, also published as ES 2066167, discloses a quick-mount clamping device which is used to obtain a cable channel comprising at least two channel sections. This clamp is arranged as an elongate rigid strip, whose first end has the shape of an approximately semicylindrical longitudinal groove, which has been foreseen to tightly fit into one of the longitudinal wire bars of the cable channel, and which has a second end in the shape of a longitudinal flange extending in a direction opposite to the opening of the groove located at the first end - towards the inside part of the wire channel - and lugs or tabs that can be bent around a respective vertical section of the U-shaped transversal wire bar; when the lug or tab is folded, with the help of a special tool, it fits into an opening which has been foreseen in the body of the rigid strip.

Considering that the clamp according to this document is longitudinally arranged on the wire bars that form the upper part of the side walls of two adjacent sections of the cable channel, the channelling or channel resulting from the coupling of different sections offers a proper resistance against the pulling and twisting efforts occurring between sections, but shows little resistance against efforts made in a direction perpendicular to the laying direction of the channel, which are caused, for instance, by the weight of the cables, which is inadequate for the consistency of the channel assembly. Furthermore, as the longitudinal tab of the second end of such clamp extends towards the interior of the cable channel, this could cause eventual damages to the cables laid over the channel.

The European Patent 0973238, also published as ES 2279589, describes a wire cable channel consisting of different sections that can be assembled without the need for clamping devices, by attaching, in a longitudinal direction, one of the ends of the cable channel, which includes, at least, two U shaped wire crossbars attached to the longitudinal wire bars and which are adequately spaced so that it is possible to snap-on fit a U-shaped wire crossbar present at the opposite side of an adjacent section of cable channel. This tight coupling of the complementary ends of the adjacent channel sections provides the resulting channel assembly with an appropriate resistance against any force applied in a direction which is perpendicular to the channel laying direction. However, this type of coupling is easily detached when it is subject to twisting forces between the different sections, in such channel laying direction, with the resulting risk that the sections may become uncoupled.

Additionally, document ES 2370570 A1, filed in the name of the applicant, proposes a clamping system to join wire cable channel sections and guarantee an adequate resistance against the efforts applied between the cable channel sections in a direction which is perpendicular to the channel laying direction and against the pulling and twisting efforts made in such channel lying direction. Taking this into consideration the system according a preferred embodiment includes an element with two clamp portions that are coupled together by means of a coupling means in the shape of a strip, which is configured to be bent forming an angle of 90°, so that each one of the clamp portions operationally faces the U-shaped wire bars located at the ends of two adjacent cable channel sections, each clamp portion being generally configured as a W-shaped piece, with two respective longitudinal grooves with a C-shaped cross section; a respective central portion which extends and connects the relevant horizontal grooves and which respectively includes a protrusion, as well as a series of respective flange sections that extend from the outer edges of the relevant longitudinal grooves and that can be bent from the outside towards the inside, surrounding the U-shaped wire bars of the cable channel.

The yoke clamps that were used in the prior art are very difficult to attach to the wire bars that form the relevant sections, as a result of the difficulties posed by the accurate size of the wire bars and the clamps, and those involved in giving way to the wire mesh sections, due to the 30 scarce space available in the sections where pressure must be manually exercised.

On the other hand, the coupling shows a poor and inaccurate result, and the wire bars and clamps are frequently subject to relative displacements, and therefore they usually must be welded, with the implicit loss of time, apart from the fragility of the coupling, which is scarcely resistant at the corner angles, and of the whole clamp; in some cases, both elements are disconnected since, in most occasions, the welding of two items made of different materials has no effectiveness.

Additionally, and as a result of the little resistance shown by the coupling between the different clamp sections, according to the aforementioned document ES 2370570 A1, the element can move in any direction and it can be easily broken; in principle, its inclusion is only valid for the simultaneous positioning of the vertical and horizontal areas. The use of said coupling strip can be avoided if the two areas coupled by it are independently positioned and no welding is used, which effectively achieves savings in terms of labour; however, with the subsequent use, it is evident that the strip can become deformed in any direction; consequently, when they are subject to displacements or loads, they can suffer deformations that are not found in the wire bars of the trays covered by them; this entails the destruction of the coupling, which in principle, can only be avoided by welding the clamps and the wire mesh, which is a very difficult task with a high rate of failure, despite the fact that a special-purpose machine has been built to hat effect.

Furthermore, when they can be positioned for the coupling of the different sections, the said sections show less resistance to loads at the horizontal central section of the crossbars that are not covered by the clamp sections than in the case of the horizontal side sections of such wire bars that are effectively covered, and, for the same reason, than the vertical side parts of the crossbars. Furthermore, when the load is laid on the cable channel, the above mentioned clamp sections may suffer deformations, which involves a short service life and lack of stability of the whole assembly.

Additionally, under load conditions, the crossbars tend to move in the opposite direction to that of the part covered by the clamp sections or, in other words, the clamp sections move in the opposite direction to that of the channel bars and, in any case, the clamp sections tend to be disconnected from the wire bars.

Additionally, it must be also mentioned that the clamps may rotate in relation to the wire bars, since the coupling means do not prevent such movement.

Thus, the relative motion between the clamps and the wire bars that occurs as a result of the channel load may deform the clamps that in turn may become disconnected from the channel 15 wire bars.

On the other hand, and as a result of the dimensional clearances of the connecting piece and the channelling sections, such clearances being inherent to the manufacturing processes of these items, the connecting piece and the cable channelling wire bars frequently become disengaged, at least partially.

After many tests, the inventors of this application have found that the trend to the disengagement of the connecting piece and the wire bars is basically the result of the dimensional and geometric inaccuracies of the free ends of the longitudinal wire bars that form the sections of the cable channelling. In fact, during the manufacturing of the channelling sections, longitudinal wire bars are cut to the appropriate lengths and then they are subsequently joined to the transverse wire bars, for instance by welding and, consequently, the ends of the wire bars show deformations and burrs that prevent the appropriate fitting of the connecting piece to the channelling sections, thus causing the above-mentioned inconveniences.

An eventual solution to that problem could be the machining of the free ends of the wire bars in order to eliminate minor defects; however, this is a cost-extensive solution.

### Object of the invention

On the basis of the previously described state of the art, the object of the invention is to provide an enhanced connecting piece for wire cable channelling sections according to the previous paragraphs, that can be easily produced and used, and that allows a solid and hard wearing connection between the different sections, without the previously mentioned disadvantages, and which also allows to cover such dimensional and geometric clearances introduced during the manufacturing process of the cable channels. The invention is based on the idea that such inconvenience prevents the contact between the connecting piece and the wire bars at the free ends of longitudinal wire bars.

According to the invention, such object is achieved by means of the characteristics included in claim 1.

The connecting piece for tray-type wire cable channelling sections, which consists of U-shaped crossbars with a central branch and side branches, as well as longitudinal wire bars, that form the side walls of the cable channelling and longitudinal wire bars that form the bottom wall of such cable channelling, is provided with a front part and a rear part where the wire crossbars of the ends of two adjacent cable channelling sections are tightly fitted. Such rear part is configured with a cross sectional area generally in the form of a W, including:
- two respective longitudinal grooves with a C-shape cross section, where the wire crossbars are tightly fitted;
- a central portion that extends connecting the relevant longitudinal grooves; and
- corresponding flange sections that extend from the outer edges of the relevant longitudinal grooves and overlap at the peripheral area of such wire crossbars of the relevant cable channelling section, following a tangential pattern.

Where:
- such connecting piece is generally configured in the shape of an U, with a central branch that extends practically covering the whole length of the respective central branch of the crossbars; and the respective side branches that form with the central branch an angle which is equal to, or greater than the angle formed by the side branches and the central branch of the crossbars of the cable channelling, and each one of the side branches extends covering the relevant side branch of the crossbars, except in the vicinity of the ends of such crossbars;
- The length of the flanges corresponding to the side branches of such connecting piece is equal to or smaller than the transverse distance between adjacent longitudinal bars of the cable channelling, where the said flanges are configured with a lower bevel edge inclined downwards, which allows the fitting between the longitudinal bars and the connecting piece and acts as an upper stop to avoid the demounting of the connection when vertical forces are applied in an upwards direction.

Characterized in that:
- the length of the side braches of the connecting piece is chosen so that when the respective connecting piece is fitted-in in the side branches of the relevant crossbar, its free end is located below and distant from the end of the longitudinal wire bar which is laid immediately above it, so that no contact exists among them;
- al least a window-shaped notch is foreseen at the central area of the side branches, whose length (A) has been selected so that the ends of the intermediate longitudinal wire bars of the relevant adjacent channelling sections do not touch the side branch; and
- a series of respective notches have been foreseen at the central area of the central branch of the connecting piece so that the ends of the longitudinal wire bars that form the bottom wall of two adjacent cable channelling sections may pass through them without contact.

### Brief description of the figures

The appended figures show a non-limitative embodiment of the invention, where:
Figures 1 and 2 respectively show perspective views of a connecting piece according to the invention.
Figure 3 shows the assembly of two adjacent cable channelling sections, using a connecting piece according to figures 1 to 2.
Figure 4, shows a zoomed rear view of the assembly according to Fig. 3.
Figure 5, shows an elevation of the assembly comprised by two adjacent cable channelling sections using the connecting piece according to Figures 1 and 2.
Figure 6 shows a perspective view of the connecting piece, showing the lower part of the central branch.

### Detailed description of a preferred embodiment

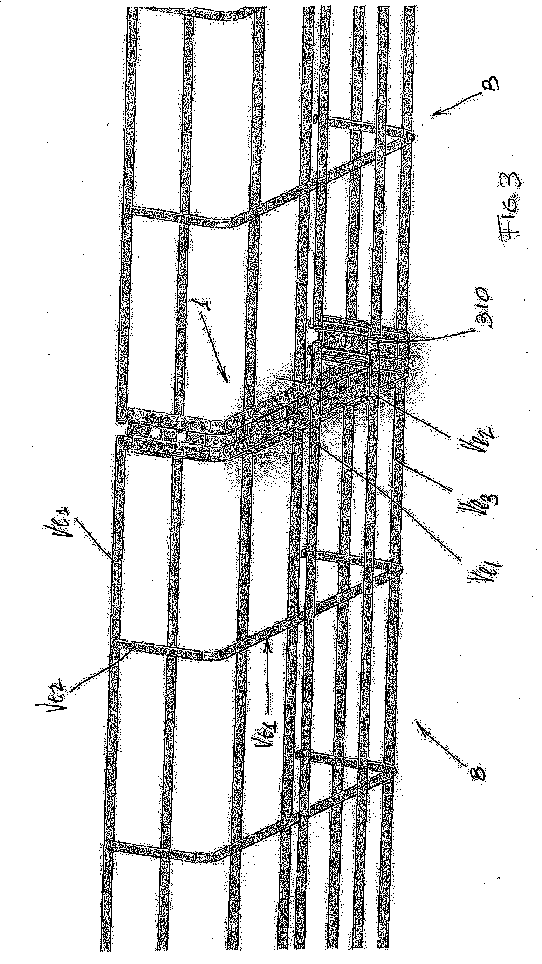

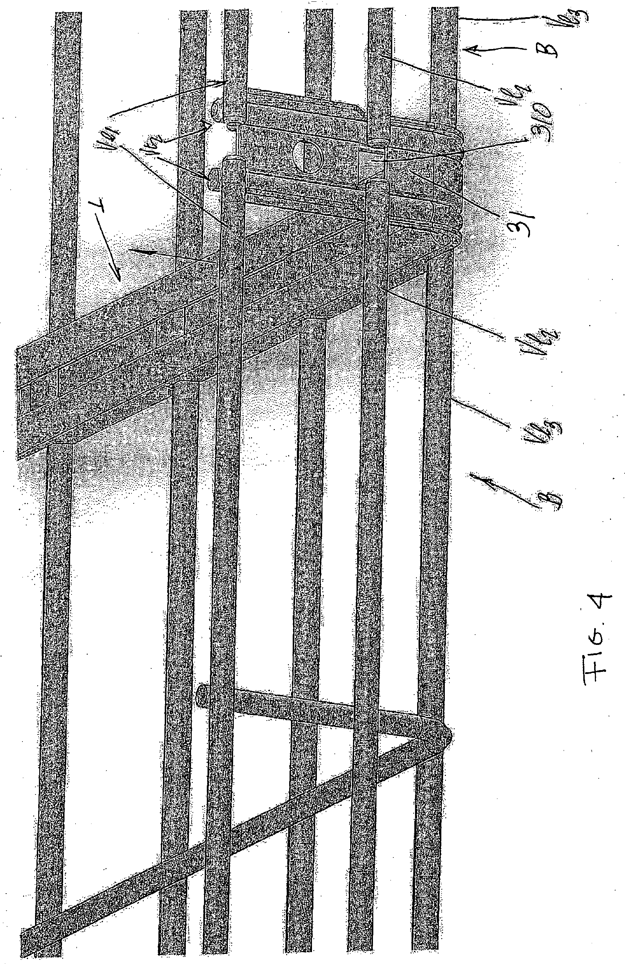

As it can be seen with more detail in the figures, the connecting piece, which has been generally designated by means of the numerical reference 1, has been foreseen to connect two cable channelling sections B, B that are adjacent lengthwise, as it can be clearly appreciated in figures 3 and 4.

The connecting piece 1 has a front part 2 and a rear part 3 which is used for the snap-on fitting of the cross wire bars Vt1-Vt2 located at the ends of two channel sections.

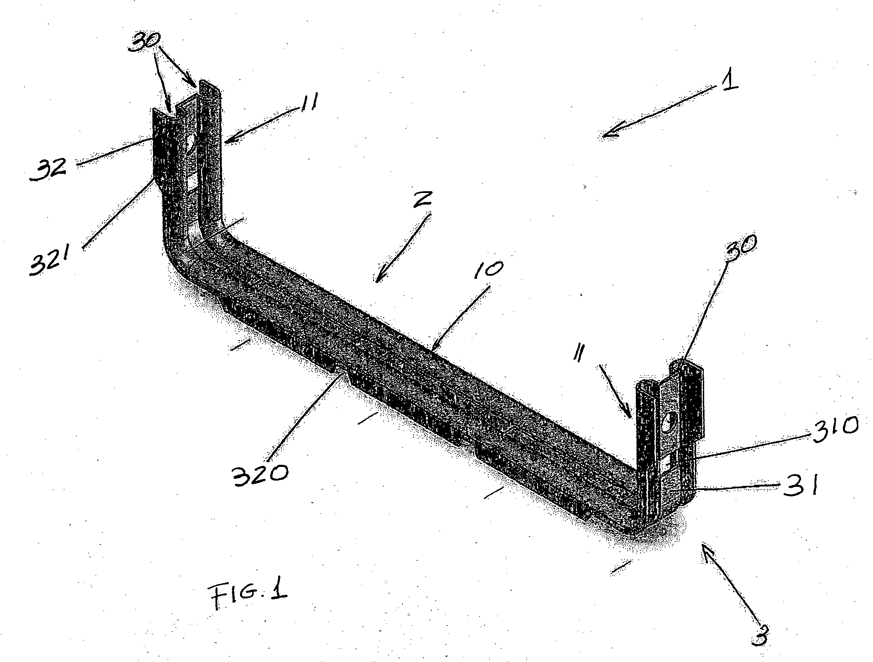

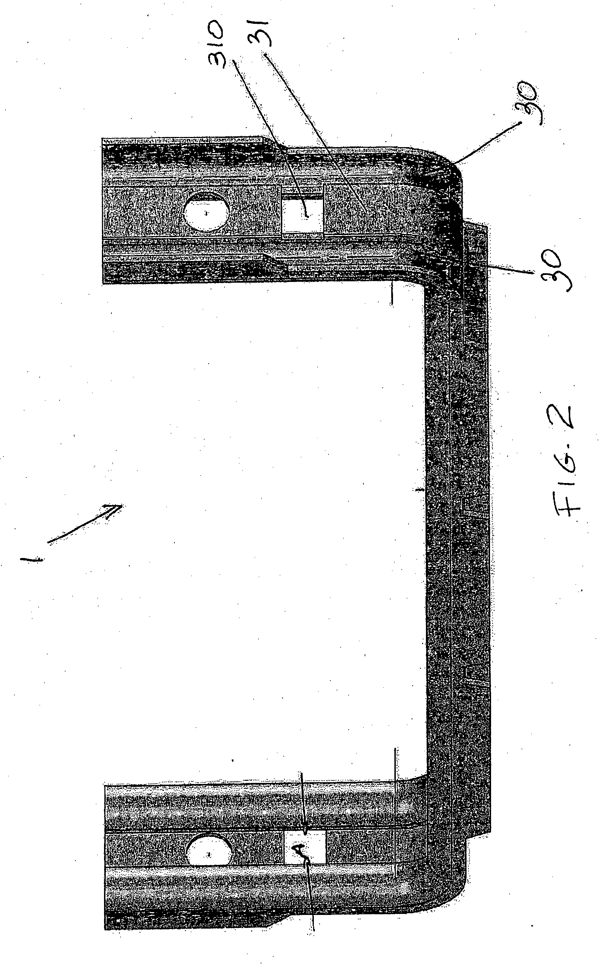

As it can be clearly appreciated in figures 1 and 2, the rear part 3 of the connecting piece 1, has a cross-section with a W-shape, incorporating, on the one hand, two respective longitudinal grooves 30 with a C-shaped cross-section, where the above mentioned wire bars are fitted, and a central part 31 which extends connecting the respective longitudinal grooves; and on the other hand, corresponding flanges 32 that extend from the outer edges of the respective longitudinal grooves 30 to be tangentially overlapped at the outer edge of the said cross wire bars Vt1, Vt2 of the corresponding channellling section B.

The connecting piece 1 is generally configured in the shape of an U with a central branch 10 which extends practically covering the whole length of the relevant central branch Vt1 of the cross bars, and the respective side branches 11 that extend forming an angle with the central branch 10 that is equal to or greater than the angle formed by the two side branches Vt2 and the central branch Vt1 of the cross bars of the cable channelling. Furthermore, each one of the side branches 11 extends covering, the respective side branch Vt2 of the cross bars, except at their relevant free end.

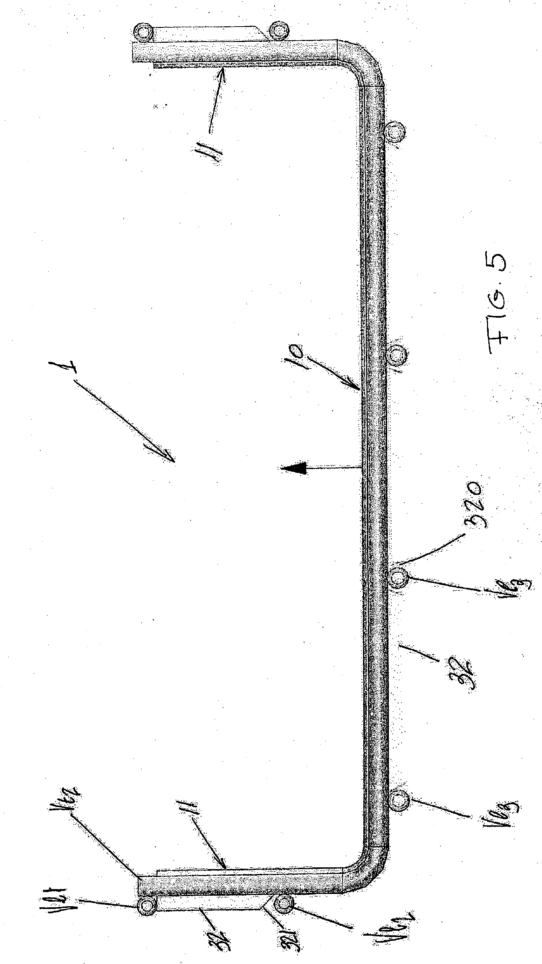

As it can be appreciated in Figures 1 to 3 and in a specially clear manner, in Figure 5, the flange 32 corresponding to the central branch 10 of the connecting piece 1 can be optionally provided with notches 320 through which the longitudinal wire bars V13 that form the bottom wall of the cable channelling sections B may run.

As it can be also appreciated in Figure 5, the flanges 32 corresponding to the side branches 11 of the said connecting piece 1 have an extension that corresponds to the cross distance between every two other adjacent longitudinal wire bars VI1, VI2, that form the side walls of the channelling, the said flanges being provided with a bevel edge 321 inclined downwards, which serves to retain such longitudinal wire bars. Thus, the connection with the connectign piece only demands a modest effort to be dismounted; however, once the sections have been connected, they cannot be dismounted as a result of the vertical forces exercised in an upwards direction.

Referring again to Figures 3 y 4, it can be appreciated that the length of the side branches 11 of the connecting piece 1 makes that, when such connecting piece is fitted-in in the side branches of the relevant crossbar, Vt2, its free end remains distant from the longitudinal wire bar V11 located immediately above it. Thus, when the connecting piece 1 is coupled to connect two adjacent cable channelling sections, B, B the ends of the longitudinal bars are not in contact with the relevant connecting piece and, furthermore, the relevant end of the crossbars Vt2 has not been introduced through the grooves 30 of the connecting piece.

Referring additionally to Figures 1 and 2, it can be observed that at the central part 31 of the side branches 11 at least a window-shaped notch 310 has been provided. Such notch has a length A, so that when the connecting piece 1 is fitted-in, the ends of the intermediate longitudinal wire bars V12 of the relevant adjacent cable channelling sections B, B are not in contact with the side branch 11.

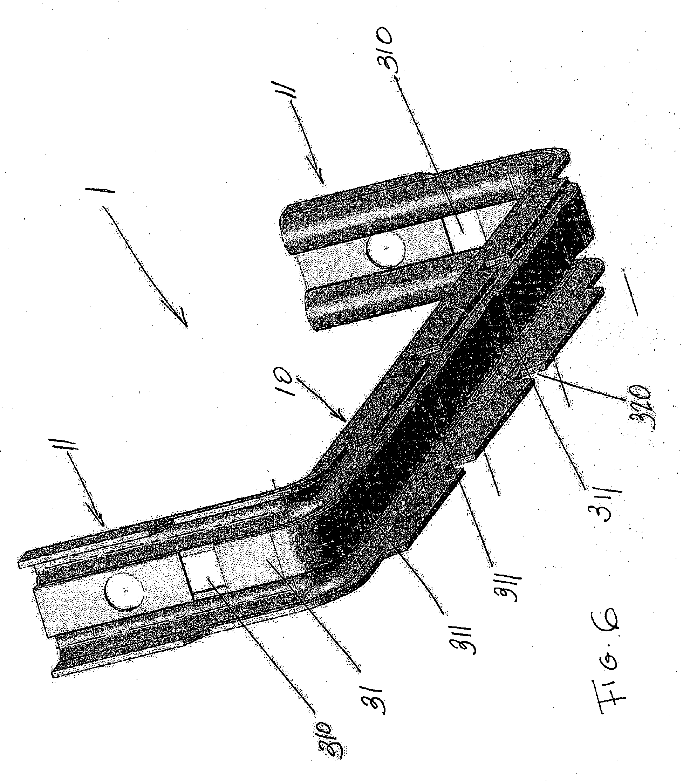

Furthermore, as it can be seen in Figure 6, a number of notches 311 have been provided at the central section 31 of the central branch 10 of the connecting piece 1 so that the ends of the longitudinal bars V13 that form the bottom wall of two adjacent channelling sections B, B may run through them without contact.

By implementing these simple measures, the connecting piece 1 is prevented from contacting the ends of the longitudinal wire bars of the channelling sections, thereby eliminating the inconvenience resulting from the configuration inaccuracies that are inherent to the whole manufacturing process of the channelling sections, as it has been previously explained.

As it will be easily understood by any person skilled in the art, the above paragraphs are a mere description, made for illustration purposes, of a preferred embodiment of the invention. Consequently, it is possible to introduce any kind of technical modifications.

Once the object of the invention has been sufficiently described, it must be stated that any embodiments derived from changes in shape, size and other similar changes, as well as those resulting from the application of what has been disclosed above should be considered included within the scope of the invention, so that the invention will only be limited by the scope of the following claims.

## Claims

1. Connecting piece of tray-type wire cable channelling sections (B) consisting of U-shaped cross wire bars with a central branch (Vt1) and side branches (Vt2), and longitudinal wire bars (V11, V12) that comprise the side walls of the channel sections, as well as longitudinal wire bars (V13) forming the bottom wall of such channel section, such connecting piece (1) being provided with a front part (2) and a rear part (3), to tightly fit the cross wire bars (Vt1-Vt2)) located at the ends of two adjacent cable channelling sections (B, B), such rear part being generally configured with a W-shaped cross-section, having:
- two longitudinal grooves (30) with a C-shaped cross-section, where the said wire bars are fitted;
- a central portion (31) which extends and connects the corresponding longitudinal grooves; and
- corresponding flanges (32) that extend from the outer edges of the relevant longitudinal grooves (30) to be tangentially overlapped at the peripheral area of such wire crossbars of the relevant cable channel section,
Where:
- such connecting piece (1) is generally configured in the shape of an U with a central branch (10) which extends practically covering the whole length of the relevant central branch (Vt1) of the cross wire bars; and the corresponding side branches (11) that form an angle with the central branch (10), which is equal to, or greater than the angle formed by the side branches (Vt2) and the central branch (Vt1) of the crossbars of the cable channelling, and each one of the side branches (11) is extended covering the corresponding side branch (Vt2) of the cross wire bars except in the vicinity of the ends of such crossbars;
- The length of the flanges (32) corresponding to the side branches (11) of such connecting piece(1) is equal to or smaller than the transverse distance between adjacent longitudinal bars (V11, V12) of the cable channelling, where the said flanges are configured with a lower bevel edge (320) inclined downwards, which allows the fitting between the bars (V11, V12) and the connecting piece (1) and acts as an upper stop to avoid the demounting of the connection when vertical forces are applied in an upwards direction.
**characterized in that**:
- the length of the side branches (11) of the connecting piece (1) is chosen so that when the said connecting piece is fitted in the side branches of the relevant crossbar (Vt2), their free end is located below and distant from the end of the longitudinal wire bar (V11) located immediately above, so that they are not in contact;
- *at* least a window-shaped notch (310) is foreseen at the central *portion* (31) of the side branches (11), whose length (A) has been selected so that the ends of the intermediate longitudinal wire bars (V12) of the relevant adjacent channelling sections (B, B) do not touch the side branch (11); and
- a series of respective notches (311) have been foreseen at the central *portion* (31) of the central branch (10) of the connecting piece (1) so that the ends of the longitudinal wire bars (VI3) that form the bottom wall of two adjacent cable channelling sections (B, B) may pass through them without contact.

## Patentansprüche

1. Verbindungsstück aus schalenartigen Draht-Kabelkanalabschnitten (B), umfassend U-förmige querlaufenden Drahtstreben mit einem Zentralarm (Vt1) und Seitenarmen (Vt2), sowie längslaufenden Drahtstreben (VI1, VI2), die die Seitenwände der Kanalabschnitte umfassen, sowie längslaufenden Drahtstreben (VI3), die die Bodenwand des Kanalabschnitts bilden, wobei das Verbindungsstück (1) mit einem Frontteil (2) und einem Rückteil (3) ausgestattet ist, um die an den Enden zweier benachbarter Kabelkanalabschnitte (B, B) befindlichen querlaufenden Drahtstreben (Vt1-Vt2) eng aneinander anzupassen, wobei das Rückteil grundsätzlich mit einem W-förmigen Querschnitt ausgestaltet ist, umfassend:
- zwei längslaufende Nuten (30) mit einem C-förmigen Querschnitt, an die die Drahtstreben angepasst werden;
- ein Zentralabschnitt (31), der die korrespondierenden längslaufenden Nuten erweitert und verbindet;
- korrespondierende Flansche (32), die sich von den äußern Kanten der betreffenden längslaufenden Nut (30) erstrecken, um an dem Außenbereich der Draht-Querstreben des betreffenden Kabelkanalabschnitts tangential überlappt zu werden,
wobei:
- das Verbindungsstück (1) grundsätzlich in Form eines U ausgestaltet ist, mit einem Zentralarm (10), der sich praktisch abdeckend über die gesamte Länge des betreffenden Zentralarms (Vt1) der querlaufenden Drahtstreben erstreckt, und den korrespondierenden Seitenarmen (11), die einen Winkel mit dem Zentralarm (10) bilden, der gleich dem oder größer als der Winkel ist, der von den Seitenarmen (Vt2) und dem Zentralarm (Vt1) der Querstreben des Kabelkanals gebildet wird, wobei sich jeder einzelne der Seitenarme (11) abdeckend über die korrespondierenden Seitenarme (Vt2) der querlaufenden Drahtstreben erstreckt, außer in der Nähe der Enden der Querstreben;
- die Länge der Flansche (32), die mit den Seitenarmen (11) des Verbindungsstücks (1) korrespondieren, gleich dem oder kleiner als der Querabstand zwischen benachbarten längslaufenden Streben (VI1, VI2) des Kabelkanals ist, wobei die Flansche mit einer abwärts geneigten, unteren abgeschrägten Kante (320) ausgestaltet sind, die die Anpassung zwischen den Streben (VI1, VI2) und dem Verbindungsstück (1) ermöglicht und als ein oberer Anschlag dient, um ein Lösen der Verbindung zu verhindern, wenn vertikale Kräfte in Aufwärtsrichtung angelegt werden;
**dadurch gekennzeichnet, dass:**
- die Länge der Seitenarme (11) des Verbindungsstücks (1) derart gewählt ist, dass, wenn das Verbindungsstück in die Seitenarme der betreffenden Querstrebe (Vt2) eingepasst ist, deren freies Ende sich unterhalb dem und beabstandet von dem unmittelbar oberhalb befindlichen Ende der längslaufenden Drahtstreben (VI1) befindet, so dass sie nicht in Kontakt stehen;
- wenigstens eine fensterförmige Aussparung (310) an dem Zentralabschnitt (31) der Seitenarme (11) vorgesehen ist, deren Länge (A) derart gewählt ist, dass die Enden der zwischenliegenden, längslaufenden Drahtstreben (VI2) der betreffenden, benachbarten Kanalabschnitte (B, B) den Seitenarm (11) nicht berühren; und
- an dem Zentralabschnitt (31) des Zentralarms (10) des Verbindungsstücks (1) eine Reihe von entsprechenden Aussparungen (311) vorgesehen ist, so dass die Enden der längslaufenden Drahtstreben (VI3), die die Bodenwand zweier benachbarter Kabelkanalabschnitte (B, B) bilden, kotaktlos durch sie hindurch verlaufen können.

## Revendications

1. Pièce de jonction de sections de canalisations pour câbles grille de type plateau (B) à base de tiges transversales en U avec une branche centrale (Vt1) et des branches latérales (Vt2), et des tiges longitudinales (V11, V12) constituant des parois latérales des sections de la canalisation et des tiges longitudinales (V13) constituant la paroi du fond de ladite canalisation ; ladite pièce de jonction (1) étant pourvue d'une partie frontale (2) et d'une partie postérieure (3) afin de bien ajuster les tiges en fil transversales (Vt1-Vt2) situées aux extrémités des deux sections de la canalisation pour câbles contigus (B, B); ladite partie postérieure étant conçue avec une section transversale, généralement en forme de W, comprenant :
- deux cannelures longitudinales (30) avec des sections transversales en forme de C où lesdites tiges en fil s'emboîtent;
- une portion centrale (31) qui s'étend en joignant les cannelures longitudinales respectives ; et
- les brides (32) respectives qui s'étendent depuis les bords extérieurs des cannelures longitudinales (30) correspondantes pour chevaucher tangentiellement sur la zone périphérique desdites tiges transversales en fil de la section de la canalisation pour câbles correspondante,
où:
- ladite pièce de jonction (1) a une configuration générale en U avec une branche centrale (10) qui s'étend en couvrant pratiquement la totalité de la longueur de la branche centrale respective (Vt1) des tiges transversales; et des branches latérales respectives (11) formant avec la branche centrale (10) un angle égal ou supérieur à l'angle formé par les branches latérales (Vt2) et la branche centrale (Vt1) des tiges transversales de la canalisation pour câbles; et dont chacune des branches latérales (11) s'étend en couvrant la branche latérale respective (Vt2) des tiges transversales, sauf à proximité des extrémités desdites tiges.
- la longueur des brides (32) qui correspond aux branches latérales (11) de ladite pièce de jonction (1) est égale ou inférieure à la distance transversale entre les tiges longitudinales (V11, V12) adjacentes à la canalisation pour câbles; et lesdites brides sont configurées avec un biseau inférieur (320) incliné vers le bas, permettant l'encastrement des tiges (V11, V12) et de la pièce de jonction (1), agissant comme butée supérieure pour empêcher que la jonction puisse se défaire par l'action d'efforts verticaux appliqués dans la direction ascendante.
**caractérisé en ce que** :
- les branches latérales (11) de la pièce de jonction (1) ont une longueur qui est choisie de manière à ce que ladite pièce de jonction puisse s'emboîter dans les branches latérales de la bride transversale (Vt2) respective ; l'extrémité libre est située à distance et au-dessous de l'extrémité de la bride longitudinale (V11) située immédiatement au-dessus, évitant ainsi le contact entre elles.
- sur la portion centrale (31) des branches latérales (11) on prévoit, au moins, une entaille en forme de fenêtre (310) avec une longueur (A) qui a été choisie pour que les extrémités des brides longitudinales intermédiaires (V12) des respectives sections de la canalisation adjacentes (B, B) ne soient pas en contact avec la branche latérales (11) ; et
- sur la portion centrale (31) de la branche centrale (10) de la pièce de jonction (1) sont prévues des entailles (311) correspondantes à travers desquelles peuvent passer, sans entrer en contact, les extrémités des brides longitudinales (V13) constituant la paroi du fond de deux sections de canalisation adjacentes (B, B).
